# FASCICULE DE BREVET EUROPEEN

(11) **EP 1 018 181 B1**
(45) Date de publication et mention de la délivrance du brevet: **04.10.2006**
(21) Numéro de dépôt: 99929459.8
(22) Date de dépôt: 09.07.1999
(51) Int. Cl.: H01M 10/40, C08F 20/44

(54) **ELECTROLYTE SOLIDE POLYMERE ET SES PROCEDES DE PREPARATION**
POLYMERFESTELEKTROLYT UND VERFAHREN ZU SEINER HERSTELLUNG
SOLID POLYMER ELECTROLYTE AND PREPARATION METHODS

(30) Priorité: 10.07.1998 FR 9809385
(43) Date de publication de la demande: 12.07.2000
(73) Titulaire: INSTITUT NATIONAL POLYTECHNIQUE DE GRENOBLE, F-38031 Grenoble (FR)
(72) Inventeur: SANCHEZ, Jean-Yves, F-38330 Saint Ismier (FR); ALLOIN, Fannie, F-38100 Grenoble (FR)
(74) Mandataire: Sueur, Yvette
(86) Numéro de dépôt international: PCT/FR1999/001680
(87) Numéro de publication internationale: WO 2000/003449

(56) Documents cités:
- EP-A- 0 798 791
- EP-A- 0 803 925
- EP-A- 0 838 873
- FR-A- 2 632 455
- US-A- 5 523 180
- US-A- 5 755 985
- CHEMICAL ABSTRACTS, vol. 108, no. 8, 22 février 1988 (1988-02-22) Columbus, Ohio, US; abstract no. 59469, NAGAI, TATSU ET AL: "Gelled electrolyte of lithium batteries" XP002122197 -& PATENT ABSTRACTS OF JAPAN vol. 12, no. 80 (E-590), 12 mars 1988 (1988-03-12) & JP 62 219469 A (HITACHI MAXELL LTD), 26 septembre 1987 (1987-09-26) -& JP 62 219469 A (HITACHI MAXELL, LTD., JAPAN) 26 septembre 1987 (1987-09-26)
- CHEMICAL ABSTRACTS, vol. 128, no. 10, 9 mars 1998 (1998-03-09) Columbus, Ohio, US; abstract no. 117388, TAKIYAMA, EIICHIRO ET AL: "Solid electrolyte-formable compositions for film batteries" XP002122198 -& DATABASE WPI Section Ch, Week 199813 Derwent Publications Ltd., London, GB; Class A11, AN 1998-141104 XP002122199 & JP 10 017709 A (SHOWA HIGH POLYMER CO LTD), 20 janvier 1998 (1998-01-20) -& PATENT ABSTRACTS OF JAPAN vol. 1998, no. 5, 30 avril 1998 (1998-04-30) & JP 10 017709 A (SHOWA HIGHPOLYMER CO LTD), 20 janvier 1998 (1998-01-20) -& JP 10 017709 A (SHOWA HIGHPOLYMER CO., LTD., JAPAN) 20 janvier 1998 (1998-01-20)

## Description

Le domaine technique de l'invention est celui des électrolytes solides polymères.

De tes électrolytes sont utilisés dans différents systèmes électrochimiques, notamment dans les générateurs électrochimiques au lithium, rechargeables ou non, mais aussi dans les systèmes électrochromes ou dans les supercondensateurs.

Ils peuvent également être utilisés pour la réalisation des électrodes composites d'un générateur.

Le lithium est de plus en plus utilisé dans les batteries en raison du potentiel rédox du couple Li/Li⁺ qui se situe à -3 volts par rapport à l'électrode normale à hydrogène et qui permet son utilisation pour les générateurs de forte tension. D'autre part sa forte capacité spécifique permet son utilisation pour les générateurs à forte énergie spécifique. Le lithium peut être utilisé sous forme métallique dans des générateurs rechargeables ou non à électrode négative de lithium et sous forme ionique dans des générateurs à électrode négative de carbone lithié, plus connus sous le nom de batteries lithium-ion.

L'utilisation d'électrolytes solides polymères a été proposée de longue date pour les batteries au lithium. De tels électrolytes permettent en effet de réaliser, avec des procédés d'élaboration simples, des batteries de faible épaisseur et de formes variées. Les électrolytes connus sont constitués, soit par un sel dissous dans un polymère sec, soit par un polymère gonflé ou gélifié par une solution d'un sel dans un mélange de solvants organiques polaires aprotiques.

Les matrices polymères connues peuvent être réalisées à base de matériaux thermoplastiques tels que le PVC (polychlorure de vinyle), le PAN (polyacrylonitrile) ou le PVDF (polyfluorure de vinylidène). En l'absence de solvants (ou plastifiants) les mélanges entre ces thermoplastiques et les sels forment des isolants ou des conducteurs ioniques très médiocres.

Après addition de solvants, ils deviennent suffisamment conducteurs aux températures ambiantes ou inférieures à la température ambiante.

Cependant le PVC est instable en milieu basique et ne peut donc être utilisé en association avec le lithium métal ou avec un système lithium/ion.

De même, les atomes de fluor du PVDF sont réactifs par rapport au lithium métallique. On notera par ailleurs que le motif de répétition CH₂-CF₂ du PVDF n'a pas d'affinité particulière avec les sels de lithium (faible caractère solvatant pour le cation Li⁺), ce qui compromet ses performances électrochimiques.

Du point de vue des procédés d'obtention, on ne connaît pas pour le PVDF, de solvants à bas point d'ébullition (< 70°C) permettant la préparation de solutions stables, ce qui complique la mise en oeuvre industrielle.

Des PVC et des PVDF sont décrits notamment par le brevet EP803925.

Le PAN, qui répond à la formule générale -[CH₂-CH(CN)]ₙ, est un polymère industriel utilisé comme fibre textile ou comme précurseur de fibres de carbone. Il comporte un groupe nitrile (CN) qui assure une bonne interaction avec le cation lithium (Li⁺). Ce polymère est notamment décrit par les brevets WO95/02314, US5219679 et partiellement par EP803925. Cependant ce polymère présente des inconvénients.

Ainsi, lorsqu'il est associé à une électrode de lithium métallique, la résistance d'interface entre lithium et électrolyte augmente régulièrement avec le temps de contact.

Cet inconvénient est pour partie lié à la présence dans le motif de répétition d'un hydrogène porté par le carbone tertiaire et situé en α du groupe nitrile (CN). L'effet fortement électro-attracteur de ce groupe nitrile rend cet hydrogène nettement plus acide. Il en résulte une modification avec le temps des performances du générateur. La résistance d'interface s'accroît progressivement ce qui affecte les performances de la batterie, notamment la puissance délivrée. De plus, la dégradation thermique du PAN se traduit par une libération d'acide cyanhydrique (HCN) ce qui est préjudiciable du point de vue de la sécurité d'emploi, surtout pour une application grand public.

Enfin, du point de vue procédé, le PAN n'est pas soluble dans les solvants à bas point d'ébullition. Le solvant du PAN le plus couramment utilisé est le DMF ou diméthylformamide dont le point d'ébullition est 152°C. Une telle caractéristique interdit certains procédés de mise en forme de l'électrolyte polymère.

En effet, une des voies d'élaboration classique des électrolytes polymères pour batteries au lithium consiste à mettre en solution dans un solvant commun, de préférence à bas point d'ébullition, un polymère, un sel et un mélange de solvants constitutifs de l'électrolyte polymère, puis, après avoir coulé le mélange sous forme de film, à chasser le solvant commun sous pression atmosphérique ou réduite sans éliminer les solvants constitutifs de l'électrolyte polymère plastifié. L'utilisation d'un solvant commun comme le DMF interdit un procédé d'élaboration incorporant des solvants de plus faible point d'ébullition que le DMF. Dans d'autres procédés, le mélange PAN + sel est dissous à chaud dans un mélange de carbonates cycliques, avant d'être coulé pour réaliser une membrane d'électrolyte polymère. La solubilisation est effectuée à une température trop élevée qui interdit par exemple l'utilisation de carbonates non cycliques.

Le but de l'invention est de proposer un électrolyte polymère solide ne présentant pas de tels inconvénients. Un électrolyte polymère selon l'invention est moins réactif vis à vis du lithium que le PVDF. Il est plus stable du point de vue électrochimique que le PAN et moins toxique que celui-ci du point de vue de l'émission d'acide cyanhydrique (HCN) suite à une dégradation thermique. De plus, l'élaboration de l'électrolyte polymère selon l'invention est plus simple car, à la différence du PVDF et du PAN, le polymère qu'il met en oeuvre est soluble dans de nombreux solvants usuels à bas point d'ébullition tels que l'acétone.

L'électrolyte polymère solide selon l'invention comprend un polymère et un sel, fixé ou non sur le polymère et il est caractérisé en ce que le polymère est un polymère de méthacrylonitrile sous la forme :
- d'un homopolymère linéaire de forte masse, renforcé ou non, ou
- d'un homopolymère, renforcé ou non, rendu tridimensionnel par réticulation.

Un électrolyte de l'invention peut contenir éventuellement en outre au moins un solvant liquide aprotique (qui aura généralement un effet de plastifiant) et éventuellement une charge.

Dans la suite du texte, un polymère de méthacrylonitrile tel que défini ci-dessus de manière générale est désigné par « PDMAN », le polyméthacrylonitrile (homopolymère) est désigné par « PMAN », le méthacrylonitrile est désigné par « MAN », le carbonate de propylène est désigné par « PC » et le carbonate d'éthylène est désigné par « EC ».

Le méthacrylonitrile est disponible dans le commerce.

Le brevet EP803925 cite le polymère PMAN, mais comme une simple alternative au PVC et au PVDF, et parmi une quinzaine d'autres polymères, pour être utilisé comme séparateur en présence de solutions liquides de sels dans des solvants organiques.

Cependant ce document ne cite aucun exemple de réalisation du PDMAN et il est muet sur les avantages que peut présenter un PDMAN vis à vis des autres polymères.

En fait, il n'est pas possible d'utiliser directement n'importe quel polymère de méthacrylonitrile pour élaborer un électrolyte solide polymère. En effet, les solvants habituellement utilisés pour réaliser les électrolytes (tels que le carbonate de propylène ou d'éthylène, qui permettent d'accroître la conductivité et d'incorporer le sel de lithium) solubilisent le PDMAN et altèrent fortement ses propriétés mécaniques.

Le PDMAN peut être un homopolymère linéaire PMAN ayant une masse molaire supérieure à 8×10⁵ g/mole, de préférence supérieure ou égale à 10⁶ g/mol, éventuellement renforcé par une charge, par exemple la silice.

Le PDMAN peut être un homopolymère PMAN qui a été réticulé en tout ou partie, par exemple par une exposition à un rayonnement ultraviolet, ou par bombardement électronique.

Lorsque le PDMAN est un homopolymère, il peut contenir de 5% à 20% en masse de silice comme charge.

L'utilisation d'un PDMAN tel que défini ci-dessus permet d'obtenir un électrolyte polymère présentant les qualités souhaitées (non toxicité, stabilité électrochimique améliorée, facilité de fabrication industrielle) tout en ayant des caractéristiques mécaniques appropriées à une mise en oeuvre pratique. Il est possible ainsi de réaliser des films d'électrolyte polymère d'une épaisseur de quelques dizaines de micromètres incorporant des sels métalliques (par exemple de lithium) et pouvant être enroulés et/ou adopter des formes diverses.

En ce qui concerne la toxicité, la dégradation du PAN a été étudiée par I. Ouillon et al, (Macromol. Chem. Phys., 198, 3425-39, 1997). Ces auteurs indiquent que la dégradation thermique du PAN se traduit essentiellement par des pertes d'ammoniac, d'acide cyanhydrique et des réactions de cyclisation. Ils ont également étudié le PMAN et constaté que la dégradation de celui-ci se traduisait essentiellement par des réactions de dépolymérisation libérant du monomère méthacrylonitrile beaucoup moins dangereux.

Pour élaborer un électrolyte polymère selon l'invention, on incorpore à l'un des polymères PDMAN décrits précédemment au moins un solvant et au moins un sel. Le solvant est choisi parmi le carbonate de propylène (PC), le carbonate d'éthylène (EC), la γ-butyrolactone, le diméthoxyéthane ou un carbonate de dialkyle. Le sel est un sel métallique, notamment un sel de lithium choisi parmi les halogénures de lithium LiX (X = Cl, Br, I ou I₃), le perfluorosulfonate de lithium (CₙF₂ₙSO₃Li), le (trifluorométhylsulfonyl)imidure de lithium (N(CF₃SO₂)₂)Li, le bis(trifluorométhylsulfonyl)méthylure de lithium (HC(CF₃SO₂)₂)Li, le tris(trifluorométhylsulfonyl)méthylure de lithium (C(CF₃SO₂)₃)Li, le perchlorate de lithium (LiClO₄), l'hexafluoroarséniate de lithium (LiAsF₆), l'hexafluorophosphate de lithium (LiPF₆), l'hexafluoroantimonate de lithium (LiSbF₆) et le tétrafluoroborate de lithium (LiBF₄).

L'invention a également pour objet les procédés de préparation de tels électrolytes polymères.

Dans un mode de réalisation, un électrolyte selon l'invention est préparé en mettant le PDMAN et le sel en solution dans un solvant à bas point d'ébullition (par exemple dans l'acétone), en coulant la solution sur un support approprié, puis en éliminant le solvant. On peut en outre introduire dans la solution un ou plusieurs solvants supplémentaires ayant un point d'ébullition plus élevé et qui agissent en tant que plastifiants (par exemple EC ou PC) ; et/ou une charge telle que la silice, utile en particulier lorsque le PDMAN est un homopolymère non réticulé.

Dans un autre mode de réalisation, un électrolyte est préparé d'une manière analogue, mais en utilisant uniquement des solvants tels que EC ou PC qui agissent comme plastifiants.

On peut également préparer un électrolyte par un procédé qui consiste à dissoudre le polymère et éventuellement un agent de réticulation et/ou des charges dans l'acétone, puis à couler la solution obtenue sur un support approprié, à éliminer l'acétone, à réticuler le film puis à y incorporer une solution du sel dans un solvant.

Dans un autre mode de réalisation, on prépare un mélange à sec des différents constituants de l'électrolyte, à savoir le PDMAN, le sel et/ou les solvants plastifiants et/ou un agent de réticulation, puis on extrude le mélange, par exemple à travers une filière plate, et on réticule le film obtenu.

Dans une autre variante, l'électrolyte peut être obtenu sous forme d'une membrane microporeuse, par exemple par un procédé d'inversion de phase. On dissout le PDMAN dans un mélange constitué par un bon solvant (par exemple l'acétone) et par un composé non solvant (par exemple l'hexane), le non solvant ayant un point d'ébullition supérieur à celui du solvant. Ensuite, on coule la solution obtenue sur un support approprié, et on évapore le solvant ayant le point d'ébullition le plus faible. Après élimination complète de ce solvant, le PDMAN précipite dans le composé non solvant et forme une membrane microporeuse. Dans un autre mode de réalisation, une membrane microporeuse peut être obtenue à partir d'une solution de PDMAN dans un solvant (par exemple l'acétone ou le THF) que l'on coule sur un support approprié, le film sur support ainsi obtenu étant ensuite immergé dans un composé non solvant (par exemple l'hexane) pour provoquer la précipitation du PDMAN sous forme d'une membrane microporeuse. Dans les deux cas, la membrane microporeuse peut ensuite être imprégnée par un électrolyte liquide contenant le sel, et/ou des solvants, et/ou une charge et/ou un agent de réticulation. Cet électrolyte liquide remplit les micropores de la membrane et peut gonfler partiellement le PDMAN.

Un électrolyte de la présente invention peut être utilisé comme électrolyte dans un générateur électrochimique au lithium, dans un supercondensateur ou dans un système électrochrome.

Un procédé de préparation d'un homopolymère de méthacrylonitrile par voie radicalaire en masse comporte les étapes suivantes :
- on dissout un amorceur de radicaux libres à décomposition thermique dans du MAN,
- on dégaze le mélange pour éliminer l'oxygène et on l'introduit dans une enceinte hermétiquement fermée,
- on porte le mélange à une température de 60 à 90°C et on le maintient à cette température pendant 24 à 72 heures.

Avantageusement, l'amorceur peut être choisi parmi l'azobisisobutyronitrile (AIBN), le peroxyde de benzoyle et le persulfate de potassium.

Dans un procédé de préparation d'un copolymère de méthacrylonitrile à blocs, la polymérisation du ou des blocs polyméthacrylonitrile peut être effectuée par amorçage anionique monofonctionnel, difonctionnel ou trifonctionnel à partir d'un bloc de poly(oxyéthylène) terminé par un, deux, ou trois groupements alcoolates.

Selon un autre mode de réalisation, le ou les blocs de poly(oxyéthylène) sont obtenus par amorçage anionique, mono- ou difonctionnel, de la polymérisation de l'oxyde d'éthylène à partir d'une chaîne anionique vivante de polyméthacrylonitrile.

Les procédés de préparation d'un homopolymère ou d'un copolymère de méthacrylonitrile peuvent comprendre une étape de réticulation après les étapes de polymérisation. La réticulation peut être effectuée par irradiation ou par bombardement électronique après incorporation d'un photoamorceur et éventuellement d'un monomère de fonctionnalité 2 ou 4 à une solution de PMAN dans un solvant. Alternativement, la réticulation peut être effectuée par liaisons uréthanes ou siloxanes.

On peut également obtenir un copolymère de méthacrylonitrile réticulé ou non par un procédé comportant essentiellement une étape d'amorçage de polymérisation radicalaire photochimique par irradiation (notamment UV). Un tel procédé conduit directement à la réalisation d'un film mince d'électrolyte polymère.

Alternativement, on peut préparer un homopolymère ou un copolymère de méthacrylonitrile par polymérisation radicalaire selon les procédés industriels classiques en émulsion ou en suspension.

L'invention sera mieux comprise à la lecture de la description qui va suivre de différents exemples de réalisation d'électrolytes polymères.

### Exemple 1

6 ml de MAN (méthacrylonitrile) fraîchement distillé sous argon pour éliminer l'oxygène, sont introduits dans un tube. 3 mg d'amorceur AIBN (azobisisobutyronitrile) sont alors dissous dans le MAN, sans addition de solvant. Le mélange est ensuite dégazé pour éliminer l'oxygène, puis on ferme hermétiquement le tube et on le porte à 70°C pendant 48 heures.

Pour obtenir de hautes masses molaires, on a choisi les conditions expérimentales suivantes : température modérée, purification du monomère, faibles quantités d'amorceur et temps de réaction. Dans cette polymérisation en masse (c'est à dire sans solvant autre que le monomère MAN), l'homopolymère PMAN obtenu est insoluble dans le monomère MAN et forme un gel transparent et dur. Après dissolution dans l'acétone, le mélange réactionnel est précipité dans le pentane.

Après lavage du précipité au pentane et séchage, on obtient un polymère précipité avec un rendement de 30%. La viscosité intrinsèque du polymère a été déterminée dans le solvant DMF (diméthylformamide) à 25°C en utilisant un viscosimètre à capillaire avec un tube d'Ubbelohde.

Une étude comparative effectuée entre le PMAN ainsi synthétisé et le PMAN commercial fourni par la société Aldrich, a montré que ce dernier était nettement moins visqueux que le polymère synthétisé. La loi de Mark-Houwink-Sakurada du PMAN dans le DMF a permis de calculer une masse viscosimétrique Mv=1,1x10⁶ g/mole, alors que celle du PMAN commercial est de 0,45x10⁶ g/mole.

En utilisant les compositions optimales d'électrolyte (PC/EC/LiClO₄) données dans la littérature, deux films ont été coulés respectivement avec le PMAN synthétisé et le PMAN commercial. Le film préparé avec le PMAN commercial est un liquide visqueux qui s'écoule tandis que celui préparé à partir du PMAN synthétisé selon la méthode ci-dessus forme un film qui ne s'écoule pas.

Les propriétés mécaniques du film réalisé avec le PMAN synthétisé peuvent être améliorées par irradiation UV ou/et par l'adjonction de charges ou de renforts fibreux. On peut ajouter notamment dans des proportions de 5 à 20% en masse, de la silice fournie par la société Degussa sous la référence FK325. Une telle adjonction permet d'améliorer les propriétés mécaniques de l'électrolyte polymère sans nuire à ses propriétés électrochimiques.

### Exemple 2

A une solution dans l'acétone de PMAN tel que préparé conformément à l'exemple 1, on ajoute 3% en masse par rapport au PMAN d'un photoamorceur, tel que l'Irgacure I 651 (2,2-diméthoxy-1,2-diphényléthane-1-one).

Après évaporation de l'acétone, le film est soumis à une irradiation UV en utilisant une lampe UV, Philips de type HPA à iodures métalliques (fer et cobalt), dont le spectre d'émission UV A intense se situe entre 350 et 400 nanomètres après un temps d'exposition de 25 mn. L'échantillon est placé à environ 8 cm de la lampe UV et refroidi par un système à effet Peltier pour maintenir sa température en dessous de 50°C.

De fait, et malgré l'absence d'insaturations, le PMAN réticule partiellement. Le taux d'extractibles est alors de 85%, mais le comportement par rapport à l'électrolyte classique est amélioré, probablement du fait de réactions de branchement qui augmentent la masse molaire Mw des parties non réticulées.

Dans une variante, à l'échantillon de PMAN dissous dans le minimum d'acétone, on incorpore 3% en masse d'Irgacure I 651, ainsi que 50 à 80% en mole de carbonate d'éthylène en tant que solvant plastifiant. L'évaporation de l'acétone n'entraîne pas celle du carbonate d'éthylène.

### Exemple 3

A une solution concentrée de PMAN dans l'acétone préparée conformément à l'exemple 1, on ajoute un méthylènebisacrylamide (désigné ci-après par « MBA ») qui est un monomère de fonctionnalité égale à 4 dans différentes proportions et 3% en poids d'Irgacure I 651 par rapport au PMAN. Le film est coulé dans un support.

Après évaporation de l'acétone, le film est soumis à une exposition UV avec la lampe utilisée dans l'exemple 2. Le taux d'insolubles a été mesuré après lavage dans un large excès d'acétone de la membrane obtenue. La différence entre la pesée de la membrane avant lavage et après lavage, suivi de séchage, permet de calculer le taux d'insolubles. Des essais ont été réalisés pour différents % en masse de monomère MBA par rapport au PMAN. Les résultats obtenus montrent que la proportion d'insolubles augmente avec le taux de MBA et passe par un maximum pour un taux de MBA de 30%. Toutefois ce taux d'insolubles atteint déjà 40% pour un taux de MBA de seulement 3%.

On a préparé un certain nombre d'électrolytes en incorporant des sels de lithium dans les polymères précédemment décrits (exemples 1 à 3) et on a effectué des mesures de conductivité.

Ces mesures sont décrites dans les exemples ci-dessous.

Le polymère est rendu conducteur ionique par incorporation d'un sel de lithium. Un sel de lithium, comme le bis(trifluorométhanesulfonyl) imidure de lithium (ou LiTFSI) et le polymère sont dissous dans l'acétone. La solution est alors coulée et le solvant évaporé. Les mesures de conductivité sont réalisées avec un impédancemètre en utilisant une cellule à électrode bloquante en acier inoxydable. L'analyse en fréquence est effectuée entre 13 MHz et 5 Hz. Les mesures sont réalisées sous vide dynamique (électrolyte polymère sec) ou sous surpression d'argon sec (électrolytes polymères plastifiés).

### Exemple 4

La conductivité du PMAN à l'état sec tel que préparé à l'exemple 1 et en présence de (trifluorométhylsulfonyl)-imidure de lithium (LiTFSI) a été mesurée dans une large gamme de concentrations.

Cet électrolyte présente une très faible conductivité pour des concentrations moyennes en sel. La composition de l'électrolyte polymère est exprimée par le rapport CN/Li qui représente le rapport entre le nombre (CN) d'unités méthacrylonitrile et le nombre (Li) de moles de sel. Une conductivité de 8x10⁻⁸ S/cm à 40°C est obtenue pour un rapport CN/Li=8.

A l'inverse du phénomène constaté pour un poly(oxyéthylène), la conductivité du PMAN sec croît lorsque la concentration en sel augmente, c'est à dire lorsque le rapport CN/Li diminue. Pour de très fortes concentrations en sel, des conductivités intéressantes telles que 5.10⁻⁵ S/cm pour un rapport CN/Li=2 sont obtenues. Le sel LiTFSI joue donc de façon surprenante le rôle d'un plastifiant externe.

| CN/Li | conductivité σ (S/cm) à 40°C | conductivité σ (S/cm) à 80°C |
|---|---|---|
| 2 | 8.10⁻⁷ | 5.10⁻⁵ |
| 3 | 10⁻⁸ | 3.10⁻⁶ |
| 6 | 10⁻⁸ | 3.10⁻⁶ |
| 8 | 8.10⁻⁸ | 8.10⁻⁶ |
| 12 | 10⁻⁸ | 3.10⁻⁶ |
| 16 | - | 2.10⁻⁶ |
| 30 | - | 10⁻⁷ |

Ce résultat obtenu en l'absence de solvant montre une très bonne interaction entre la matrice thermoplastique et le sel, puisque celui-ci permet de préparer des électrolytes polymères très concentrés en sel, ce qui est favorable aux conductivités des électrolytes polymères plastifiés.

### Exemple 5

A une solution de PMAN dans l'acétone on ajoute 30% en masse de méthylène-bisacrylamide qui est un monomère de fonctionnalité égale à 4 (commercialisé par la société Aldrich sous la référence 14,832-6), 3% en masse d'Irgacure I 651, le sel LiTFSI et le carbonate d'éthylène (EC) à titre de plastifiant.

Après évaporation de l'acétone, le film obtenu est exposé à un rayonnement UV avec la lampe décrite dans l'exemple 2. Le carbonate de propylène utilisé pour les mesures de conductivité n'est ajouté qu'après la réticulation pour éviter son évaporation par échauffement infrarouge au cours de la réticulation.

Une conductivité de 10⁻³ S/cm à 20°C est obtenue pour un électrolyte de composition molaire PMAN(20%) / EC(50%) / PC(25%) / LiTFSI (5%). « PMAN(20%) » signifie que la proportion d'homopolymère PMAN présent dans l'électrolyte est telle que l'électrolyte contient 20 moles d'unités MAN pour 50 moles de EC, 25 moles de PC et 5 moles de LiTFSI.

Par ailleurs, on a élaboré un électrolyte de composition molaire PMAN(25%) / EC(70%) / PC(00%) / LiTFSI (5%) qui présente une conductivité électrique de 10⁻³ S/cm à 20°C. La conductivité reste égale à 7.10⁻⁴ S/cm à 8°C, puis elle diminue rapidement à plus basse température du fait de la cristallisation de l'EC.

Du fait qu'ils ne mettent en oeuvre qu'un solvant (EC), qui est le moins volatil, ces derniers électrolytes sont plus faciles à produire, mais ils sont limités à des utilisations à des températures supérieures à 8°C.

Des études de stabilité électrochimique ont été effectuées sur l'échantillon de composition molaire PMAN(20%) / EC(50%) / PC (25%) /LiTFSI (5%). L'échantillon présente, par voltamétrie cyclique sur macroélectrode d'acier inox, une bonne stabilité en réduction jusqu'à 0 Volt par rapport au couple électrochimique Li/Li⁺ et en oxydation jusqu'à au moins 4,1 V (toujours par rapport au couple Li/Li⁺). Le suivi de l'évolution, au cours du temps, de la résistance d'interface entre l'électrolyte polymère et l'électrode de lithium métal à 40°C montre une bonne stabilité de l'interface sur plusieurs jours. Ce comportement est différent de celui observé avec un électrolyte classique associant PAN, PC et LiClO₄, qui montre une augmentation continue de la résistance d'interface avec le temps.

**Tableau donnant les rapports R/Rₜₒ des résistances d'interface au cours du temps.**

| Temps en Heures | R/Rₜₒ Li/(PAN/EC/PC/LiClO₄) [1] | R/Rₜₒ Li/(PMAN/EC/PC/LiTFSI) |
|---|---|---|
| 0 | 1 | 1 |
| 2 | 1,50 | 1,14 |
| 24 | 3 | 1,14 |
| 50 | 5 | 1,15 |
| 70 | 6 | 1 |
| 80 | 7 | 0,9 |
| 95 | 7,6 | 0,97 |
| 120 | 9 | 1 |
| 130 | 11 | 0,97 |

| | | |
|---|---|---|
| [1] essai pour le PAN décrit dans : G.B. Appetecchi, F. Croce and B. Scrosati, Electrochimica Acta, 40, 991, 1995 | | |

La résistance d'interface initiale est Rₜₒ et la résistance à un instant t est notée R. L'évolution du rapport R/Rₜₒ au cours du temps montre, aux incertitudes expérimentales près, la stabilité du PMAN alors que la résistance d'interface croît régulièrement pour l'électrolyte à base de PAN et se trouve multipliée par un facteur supérieur à 10 après cinq jours.

## Revendications

1. Electrolyte polymère solide **caractérisé en ce qu'**il comprend au moins un polymère de méthacrylonitrile choisi parmi les homopolymères linéaires qui ont une masse molaire supérieure à 8x10⁵ g/mole et qui sont renforcés ou non, et les homopolymères, renforcés ou non, rendus tridimensionnels par réticulation.

2. Electrolyte polymère solide selon la revendication 1, **caractérisé en ce qu'**il contient en outre de 5% à 20% en masse de silice.

3. Electrolyte polymère selon la revendication 1, **caractérisé en ce qu'**il comprend au moins un solvant choisi parmi le carbonate de propylène (PC), le carbonate d'éthylène (EC), la γ-butyrolactone, le diméthoxyéthane et les carbonates dialkyle.

4. Electrolyte polymère selon la revendication 1, **caractérisé en ce qu'**il comprend au moins un sel de lithium choisi dans le groupe constitué par les halogénures de lithium, le perfluorosulfonate de lithium, le (trifluorométhylsulfonyl)imidure de lithium, le bis(trifluorométhylsulfonyl)méthylure de lithium, le tris(trifluorométhylsulfonyl)méthylure de lithium, le perchlorate de lithium, l'hexafluoroarséniate de lithium, l'hexafluorophosphate de lithium, l'hexafluoroantimonate de lithium et le tétrafluoroborate de lithium.

## Claims

1. Solid polymer electrolyte, **characterized in that** it comprises at least one methacrylonitrile polymer chosen from:
- linear homopolymers of high mass, which may or may not be reinforced;
- homopolymers, which may or may not be reinforced, rendered three-dimensional by crosslinking;

2. Solid polymer electrolyte according to Claim 1, **characterized in that** it further comprises from 5% to 20% by mass of silica.

3. Polymer electrolyte according to Claim 1, **characterized in that** it comprises at least one solvent chosen from propylene carbonate (PC), ethylene carbonate (EC), γ-butyrolactone, dimethoxyethane and dialkyl carbonates.

4. Polymer electrolyte according to Claim 1, **characterized in that** it comprises at least one lithium salt chosen from the group consisting of lithium halides, lithium perfluorosulfonate, lithium (trifluoromethylsulfonyl)imide, lithium bis(trifluoromethylsulfonyl)methide, lithium tris(trifluoromethylsulfonyl)methide, lithium perchlorate, lithium hexafluoroarsenate, lithium hexafluorophosphate, lithium hexafluoroantimonate and lithium tetrafluoroborate.

## Patentansprüche

1. Polymerfestelektrolyt, **dadurch gekennzeichnet, dass** er zumindest ein Methacrylnitrilpolymer umfasst, das aus gegebenenfalls verstärkten linearen Homopolymeren mit einem Molekulargewicht von über 8x10⁵ g/mol und gegebenenfalls verstärkten Homopolymeren, die durch Vernetzung dreidimensional ausgebildet sind, ausgewählt ist.

2. Polymerfestelektrolyt nach Anspruch 1, **dadurch gekennzeichnet, dass** er darüber hinaus 5 Gew.-% bis 20 Gew.-% Siliciumdioxid enthält.

3. Polymerelektrolyt nach Anspruch 1, **dadurch gekennzeichnet, dass** er zumindest ein Lösungsmittel, ausgewählt aus Propylencarbonat (PC), Ethylencarbonat (EC), γ-Butyrolacton, Dimethoxyethan und Dialkylcarbonaten, umfasst.

4. Polymerelektrolyt nach Anspruch 1, **dadurch gekennzeichnet, dass** er zumindest ein Lithiumsalz, ausgewählt aus der aus Lithiumhalogeniden, Lithiumperfluorsulfonat, Lithium(trifluormethylsulfonyl)imid, Lithium-bis(trifluormethylsulfonyl)methylid, Lithium-tris(trifluormethylsulfonyl)methylid, Lithiumperchlorat, Lithiumhexafluoroarsenat, Lithiumhexafluorophosphat, Lithiumhexafluoroantimonat und Lithiumtetrafluoroborat bestehenden Gruppe, umfasst.
